# EUROPÄISCHE PATENTSCHRIFT

(11) **EP 1 119 464 B1**
(45) Veröffentlichungstag und Bekanntmachung des Hinweises auf die Patenterteilung: **31.07.2002**
(21) Anmeldenummer: 99955830.7
(22) Anmeldetag: 01.10.1999
(51) Int. Cl.: B60H 1/24

(54) **VENTIL, INSBESONDERE BE- UND ENTLÜFTUNGSVENTIL FÜR DEN INNENRAUM EINES KRAFTFAHRZEUGES**
VALVE, ESPECIALLY AN AIR ENTRY AND AIR EXIT VENTILATION VALVE FOR THE PASSENGER COMPARTMENT OF A MOTOR VEHICLE
SOUPAPE, EN PARTICULIER SOUPAPE D'ENTREE ET DE SORTIE D'AIR POUR L'ESPACE INTERIEUR D'UN VEHICULE AUTOMOBILE

(30) Priorität: 05.10.1998 DE 19845746
(43) Veröffentlichungstag der Anmeldung: 01.08.2001
(73) Patentinhaber: TRW Automotive Electronics & Components GmbH & Co. KG, 78315 Radolfzell (DE)
(72) Erfinder: STIEHL, Udo, D-67691 Hochspeyer (DE)
(74) Vertreter: Eder, Christian, Dipl.-Ing.
(86) Internationale Anmeldenummer: DE9903161
(87) Internationale Veröffentlichungsnummer: WO0020239

(56) Entgegenhaltungen:
- DE-A- 3 503 600
- DE-A- 4 002 052
- DE-A- 4 023 190
- DE-A- 19 706 734
- FR-A- 2 550 848
- GB-A- 2 217 813

## Beschreibung

Die Erfindung bezieht sich auf ein Ventil, insbesondere Be- und Entlüftungsventil für den Innenraum eines Kraftfahrzeuges, mit einem Gehäuse und mit mindestens einer in Ruhestellung gegen Stege des Gehäuses anliegenden Abschlussklappe, welche über einen Lagerbereich mit dem Gehäuse verbunden ist sowie auf ein Verfahren zur Herstellung des vorgenannten Ventils.

Als nächstkommender Stand der Technik ist bereits ein derartiges Ventil bekannt (DE-A-40 23 190), welches als Teil einer Rückluftsperre für eine Einrichtung zur Entlüftung des Innenraums eines Kraftfahrzeuges eingesetzt wird. Die Abschlussklappe ist direkt mit dem Gehäuse verbunden, wobei einmal die Möglichkeit besteht, dass die Abschlussklappe eine Zunge aufweist, welche verrastet in einer Öffnung des Gehäuses angeordnet ist. Nach einer anderen Ausführungsmöglichkeit dieses Standes der Technik wird über ein Filmscharnier eine Verbindung zwischen dem Gehäuse und der Abschlussklappe hergestellt, wobei dann die Abschlussklappe um das Filmscharnier herumgeklappt wird und damit die gesamte Rückluftsperre einsatzbereit ist.

Weiterer Stand der Technik sind Entlüftungsgehäuse für Kraftfahrzeuge (DE-C-40 02 052, DE-A-35 03 600), bei welchen die Abschlussklappen Lippenränder aufweisen, die über Zapfen mit dem Gehäuse verschiebesicher verbunden sind.

Gegenüber diesem vorgenannten Stand der Technik besteht die Aufgabe der vorliegenden Erfindung darin, ein Ventil der eingangs genannten Art und ein Verfahren zur Herstellung desselben zu schaffen, bei welchem eine erhebliche Kostenreduzierung erzielt wird.

Diese Aufgabe wird gemäß Anspruch 1 dadurch gelöst, dass das Gehäuse und die Abschlussklappe im Zweikomponenten-Spritzgießverfahren hergestellt sind, wobei das Gehäuse aus einer harten und die Abschlussklappe aus einer demgegenüber weicheren Materialkomponente bestehen und dass der Lagerbereich der Abschlussklappe und/oder der damit zusammenwirkende Bereich des Gehäuses mindestens ein in mindestens eine Ausnehmung eingreifendes Halteprofil aufweisen bzw. aufweist. Die Herstellung des Gehäuses aus harter Materialkomponente mit nachfolgender Einspritzung der Abschlussklappe aus weicherer Materialkomponente erfolgt vorteilhafterweise in ein und demselben Werkzeug, wobei keine Haftung der beiden Komponenten an den Kontaktflächen besteht und die Verbindung zwischen der Abschlussklappe und dem Gehäuse lediglich im Lagerbereich erfolgt. Damit ergibt sich eine erhebliche Kostenreduzierung durch Wegfallen der Montage der Abschlussklappen an dem Gehäuse.

In weiterer Ausgestaltung der Erfindung kann der Lagerbereich der Abschlussklappe mindestens ein in einer Ausnehmung des Gehäuses eingelagertes Halteprofil aufweisen. Nach einer anderen erfindungsgemäßen Konfiguration kann der Lagerbereich der Abschlussklappe beidseitig seiner Deckflächen je ein in einer Ausnehmung eingelagertes Halteprofil besitzen. Die Halteprofile können sich diagonal einander gegenüberliegen.

In weiterer Ausgestaltung der Erfindung kann der Bereich des Gehäuses mit einem Durchgangsschlitz versehen sein, durch welchen sich der Lagerbereich der Abschlussklappe zumindest teilweise erstreckt. Das Gehäuse kann hinter dem Durchgangsschlitz mit mindestens einer Ausnehmung und/oder einem Profil zum Einlagern eines Halteprofils und/oder einer Ausnehmung des Lagerbereichs der Abschlussklappe versehen sein.

Nach einem anderen Merkmal der Erfindung ist die Abschlussklappe nur in ihrem Lagerbereich mit einer Seite des Gehäuses verbunden; darüber hinaus haben beide Materialkomponenten trotz Aufliegens der Abschlussklappe auf den Stegen des Gehäuses im Ruhezustand keine Haftung miteinander. In dieser Position werden auch die beiden Materialkomponenten gefertigt.

Weiterhin besteht die Möglichkeit, dass der Lagerbereich der Abschlussklappe hinter dem Durchgangsschlitz ein erstes, in einer Ausnehmung des Gehäuses eingelagertes, aufragendes Halteprofil und diesem diagonal gegenüberliegend ein zweites, nach innen gerichtetes, gegen eine Gehäusekante anliegendes Halteprofil aufweist.

Die Erfindung wird nachfolgend anhand eines in der Zeichnung dargestellten Ausführungsbeispiels näher beschrieben. In der Zeichnung zeigen:
- Fig.1: eine perspektivische Einzelansicht des Gehäuses, teils gebrochen;
- Fig. 2: eine perspektivische Ansicht der Abschlussklappe;
- Fig. 3: das Gehäuse und die Abschlussklappe im zusammengebauten Zustand in perspektivischer Ansicht und
- Fig. 4: eine vergrößerte Darstellung des Bereichs X nach Fig. 3.
- Fig. 5a-c: weitere Ausführungsmöglichkeiten der Verbindung zwischen dem Gehäuse und dem Lagerbereich der Abschlussklappe.

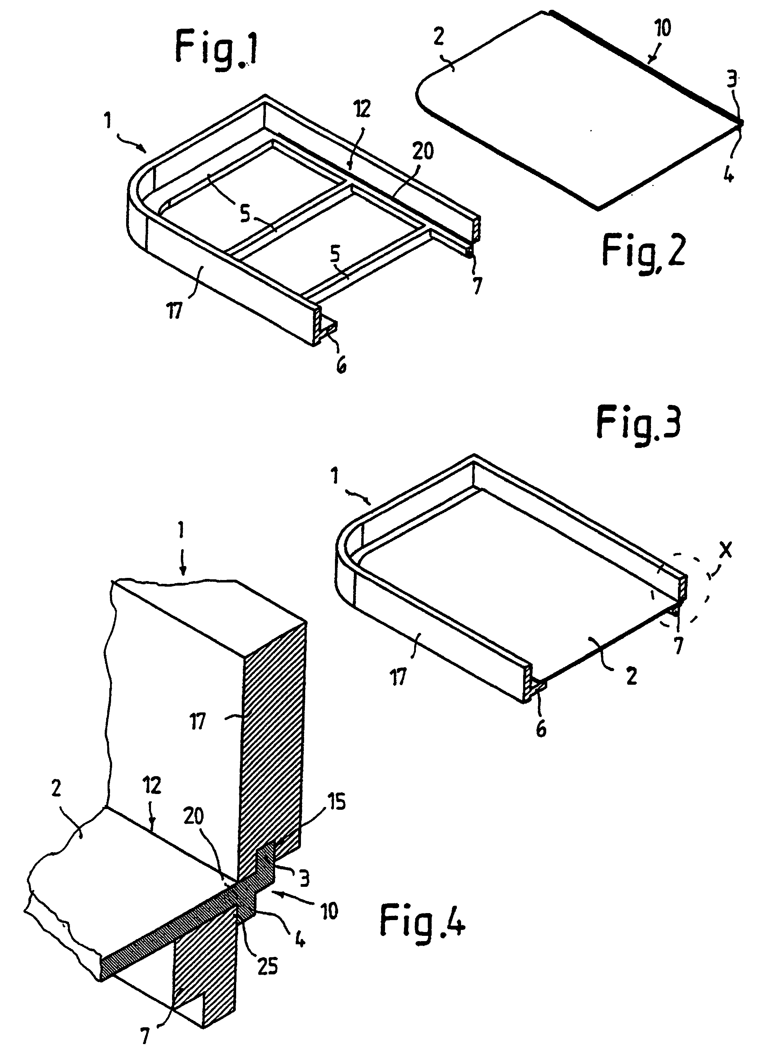

Das erfindungsgemäße Ventil, insbesondere Be- und Entlüftungsventil für den Innenraum eines Kraftfahrzeuges besteht aus einem Gehäuse 1 nach Fig. 1, welches im Abstand voneinander liegende Stege 5 aufweist. Bei dem vorliegenden Ausführungsbeispiel liegen die Stege parallel, wobei jedoch auch die Möglichkeit besteht, andere Stegkonfigurationen einzusetzen und diese in anderer Weise, beispielsweise diagonal anzuordnen.

Die Stege 5 erstrecken sich von einem Bereich 12 des Gehäuses, welcher vorzugsweise einen Durchgangsschlitz 20 besitzt, bis zu einem Anlageflansch 6. Die gesamte Einheit ist von einem Rahmen 17 umgeben. Wie aus Fig. 1 erkennbar, erstreckt sich der Durchgangsschlitz 20 nur über eine Längsseite des Gehäuses 1. Unterhalb des Durchgangsschlitzes befindet sich ein weiterer Anlageflansch 7, wobei erkennbar ist, dass die Stege 5 zwischen den Anlageflanschen 6 und 7 verlaufen.

Fig. 2 zeigt eine Abschlussklappe 2 in perspektivischer Einzelansicht. Diese Abschlussklappe 2 weist einen Lagerbereich 10 auf, welcher bei dem vorliegenden Ausführungsbeispiel beidseitig seiner Deckflächen je ein Halteprofil 3 und 4 aufweist.

Fig. 3 zeigt das erfindungsgemäße Ventil, d.h. hier sind das Gehäuse 1 und die Abschlussklappe 2 im Zweikomponenten-Spritzgießverfahren hergestellt, wobei das Gehäuse 1 aus einer harten und die Abschlussklappe aus einer demgegenüber weicheren Materialkomponente bestehen. Zuerst erfolgt die Herstellung des Gehäuses 1 mit nachfolgender Einspritzung der Abschlussklappe 2, und zwar in ein und demselben Werkzeug. Das erfindungsgemäße Ventil ist auf einfache Weise herstellbar und weist andererseits hohe Funktionssicherheit auf.

Fig. 4 zeigt in vergrößerter Ansicht den Abschnitt X nach Fig. 3. Wie erkennbar, weist der Lagerbereich 10 der Abschlussklappe 2 die beiden diagonal einander gegenüberliegenden Halteprofile 3 und 4 auf, wobei sich das Halteprofil 3 in einer Ausnehmung 15 des Rahmens 17 des Gehäuses 1 einlagert, wohingegen das Halteprofil 4 gegen eine Gehäusekante 25 des Anlageflanschs 7 des Gehäuses 1 anliegt. Es ergibt sich damit eine sehr funktionssichere Verbindung der Abschlussklappe 2 in dem Gehäuse 1, und zwar nur in dem Lagerbereich 12; damit ist gewährleistet, dass keinerlei Haftung der Abschlussklappe 2 an den Stegen 5 sowie an der Oberseite der Anlageflansche 6 und 7 erfolgt.

Im Ruhezustand liegt die Abschlussklappe 2 in dem Gehäuse 1 auf den Auflageflächen der Stege 5 sowie der Anlageflansche 6 und 7 auf. Bei einem entsprechenden Luftstrom hebt sich die Abschlussklappe 2 von den Auflageflächen ab, wobei die Halteprofile 3 und 4 in der Ausnehmung 15 bzw. an der Gehäusekante 25 ein Loslösen bzw. ein Verrutschen der Abschlussklappe 2 in dem Gehäuse 1 einwandfrei verhindern.

Der Gegenstand der vorliegenden Erfindung ist nicht auf die Befestigung der Abschlussklappe 2 in dem Gehäuse 1 gemäß dem Ausführungsbeispiel nach Fig. 4 beschränkt. Es besteht auch die Möglichkeit einer kinematischen Umkehr insofern, als die Abschlussklappe mit einer Ausnehmung versehen ist, in welche ein Steg des Gehäuses hineinragt; darüber hinaus kann auch die Oberseite des Anlageflanschs 7 mit einem Halteprofil versehen sein, welches sich in eine entsprechende Ausnehmung der Abschlussklappe einlagert.

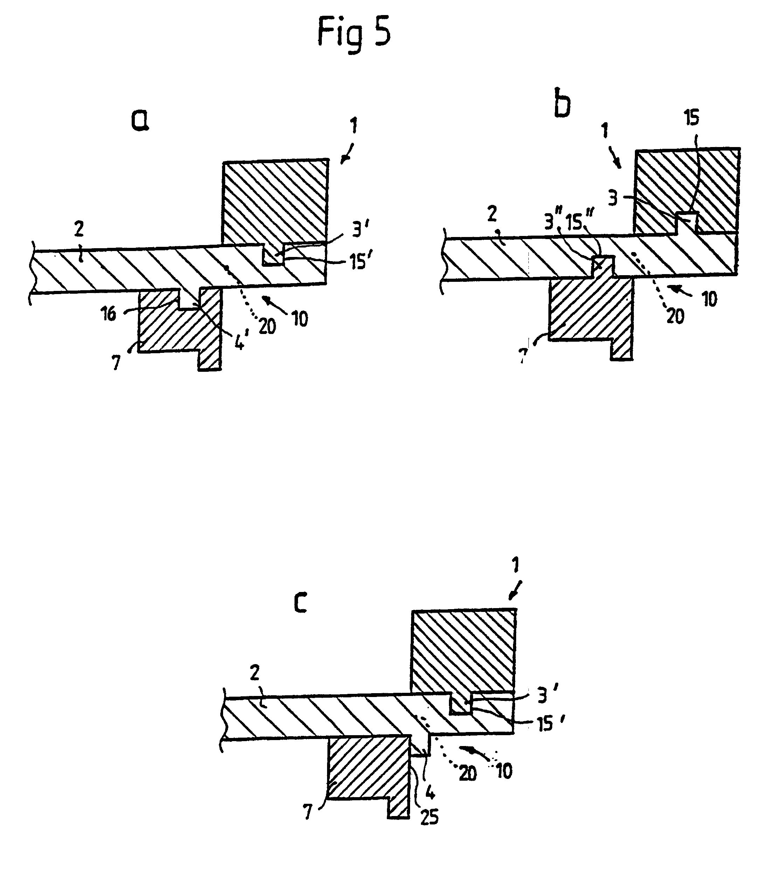

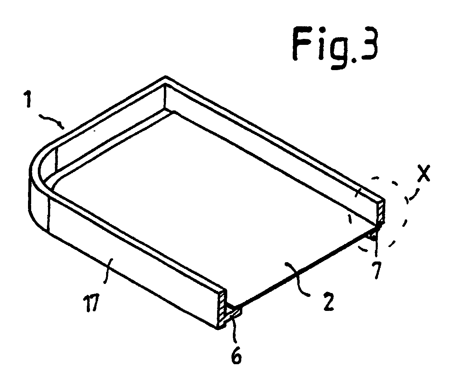

Gemäß Fig. 5a besteht die Möglichkeit, dass der Lagerbereich 10 der Abschlussklappe 2 vor dem Durchgangsschlitz 20 ein Halteprofil 4' und hinter dem Durchgangsschlitz eine Ausnehmung 15' aufweist. Entsprechend ist das Gehäuse 1 mit einer das Halteprofil 4' aufnehmenden Ausnehmung 16 und einem in die Ausnehmung 15' des Lagerbereichs 10 der Abschlussklappe 2 einlagerbaren Halteprofil 3' versehen.

### Eine andere Ausführungsmöglichkeit ist in Fig. 5b dargestellt:

Hier weist der Lagerbereich 10 der Abschlussklappe 2 vor dem Durchgangsschlitz 20 eine Ausnehmung 15" und hinter dem Durchgangsschlitz ein Halteprofil 3 auf. Das Gehäuse 1 ist mit einem in die Ausnehmung 15" einlagerbaren Halteprofil 3' und einer das Halteprofil 3 des Lagerbereichs 2 aufnehmenden Ausnehmungen 15 versehen.

### Eine andere Alternative ist aus Fig. 5c erkennbar:

Das Gehäuse 1 weist hier hinter dem Durchgangsschlitz 20 ein in einer Ausnehmung 15' des Lagerbereichs 10 der Abschlussklappe einlagerbares Halteprofil 3' auf.

An der Unterseite ist die Abschlussklappe 2 mit einem Halteprofil 4 versehen, welches gegen eine Gehäusekante 25 anliegt.

Neben den vorgenannten Ausführungsformen sind auch weitere Varianten der Verbindung zwischen dem Gehäuse und der Abschlussklappe im Lagerbereich 10 denkbar.

Durch die Anwendung des Zweikomponenten-Spritzgießverfahrens ergibt sich damit eine einfache Herstellung des Gehäuses bei erheblicher Kostenreduzierung.

## Patentansprüche

1. Ventil, insbesondere Be- und Entlüftungsventil für den Innenraum eines Kraftfahrzeuges, mit einem Gehäuse (1) und mit mindestens einer in Ruhestellung gegen Stege (5) des Gehäuses (1) anliegenden Abschlussklappe (2), welche über einen Lagerbereich (10) mit dem Gehäuse (1) verbunden ist,
**dadurch gekennzeichnet,**
**dass** das Gehäuse (1) und die Abschlussklappe (2) im Zweikomponentenspritzgießverfahren hergestellt sind,
wobei das Gehäuse (1) aus einer harten und die Abschlussklappe (2) aus einer demgegenüber weicheren Materialkomponente bestehen und
**dass** der Lagerbereich der Abschlussklappe (2) und/oder der damit zusammenwirkende Bereich (12) des Gehäuses (1) mindestens ein in mindestens eine Ausnehmung (15, 15', 15", 16) eingreifendes Halteprofil (3, 3', 4, 4') aufweisen bzw. aufweist.

2. Ventil nach Anspruch 1, **dadurch gekennzeichnet, dass** der Lagerbereich (10) der Abschlussklappe (2) mindestens ein in eine Ausnehmung (15) des Gehäuses (1) eingelagertes Halteprofil (3) aufweist.

3. Ventil nach Anspruch 2, **dadurch gekennzeichnet, dass** der Lagerbereich (10) der Abschlussklappe vor dem Durchgangsschlitz (20) dem Halteprofil (3) diagonal gegenüberliegend ein zweites, nach innen gerichtetes, gegen eine Gehäusekante (25) anliegendes Halteprofil (4) aufweist.

4. Ventil nach Anspruch 1, **dadurch gekennzeichnet, dass** der Lagerbereich (10) der Abschlussklappe (2) vor dem Durchgangsschlitz (20) ein Halteprofil (4') und hinter dem Durchgangsschlitz (20) eine Ausnehmung (15') aufweist,
wobei das Gehäuse (1) mit einer das Halteprofil (4') des Lagerbereichs (10) aufnehmenden Ausnehmung (16) und einem in die Ausnehmung (15') des Lagerbereichs einlagerbaren Halteprofil (3') versehen ist.

5. Ventil nach Anspruch 1, **dadurch gekennzeichnet, dass** der Lagerbereich (10) der Abschlussklappe (2) vor dem Durchgangsschlitz (20) eine Ausnehmung (15'') und hinter dem Durchgangsschlitz (20) ein Halteprofil (3) aufweist,
wobei das Gehäuse (1) mit einem in die Ausnehmung (15'') des Lagerbereichs einlagerbaren Halteprofil (3") und einer das Halteprofil (3) des Lagerbereichs aufnehmenden Ausnehmung (15) versehen ist.

6. Ventil nach Anspruch 1, **dadurch gekennzeichnet, dass** das Gehäuse (1) hinter dem Durchgangsschlitz (20) ein in einer Ausnehmung (15') des Lagerbereichs (10) einlagerbares Halteprofil (3') aufweist,
dem Halteprofil (3') diagonal gegenüberliegend ein zweites, nach innen gerichtetes, gegen eine Gehäusekante (25) anliegendes Halteprofil (4') vorgesehen ist.

7. Ventil nach einem oder mehreren der vorhergehenden Ansprüche, **dadurch gekennzeichnet, dass** die Abschlussklappe (2) nur in ihrem Lagerbereich (10) mit einer Seite des Gehäuses (1) verbunden ist und darüber hinaus beide Materialkomponenten trotz Aufliegens des Abschlussklappe (2) auf den Stegen (5) des Gehäuses (1) im Ruhezustand keine Haftung miteinander haben.

8. Verfahren zum Herstellen eines Ventils, insbesondere Be- und Entlüftungsventils für den Innenraum eines Kraftfahrzeuges, mit einem Gehäuse (1) und mit mindestens einer in Ruhestellung gegen Stege (5) des Gehäuses (1) anliegenden Abschlussklappe (2), welche über einen Lagerbereich (10) mit dem Gehäuse (1) verbunden ist,
**dadurch gekennzeichnet,**
**dass** mit einem Zweikomponenten-Spritzgießverfahren vorzugsweise zuerst das Gehäuse (1) aus einer harten Materialkomponente hergestellt wird und nachfolgend das Einspritzen der Abschlussklappe (2) aus einer demgegenüber weicheren Materialkomponente in demselben Werkzeug erfolgt, wobei die Abschlussklappe (2) nur im Lagerbereich (10) mit dem Gehäuse (1) verbunden ist.

9. Verfahren nach Anspruch 8, **dadurch gekennzeichnet, dass** die Verbindung zwischen dem Gehäuse (1) und der Abschlussklappe (2) im Lagerbereich über mindestens ein Halteprofil (3, 4) und/oder mindestens eine Ausnehmung (15,16) hergestellt wird.

## Claims

1. Valve, in particular ventilation and venting valve, for the interior of a motor vehicle, having a housing (1) and having at least one closing flap (2) which, in the rest position, bears against webs (5) of the housing (1) and is connected to the housing (1) via a bearing region (10), **characterized in that** the housing (1) and the closing flap (2) are produced by two-component injection moulding, the housing (1) consisting of a hard material component and the closing flap (2) consisting of a material component which is softer in comparison, and **in that** the bearing region of the closing flap (2) and/or that region (12) of the housing (1) which interacts therewith have or has at least one retaining profile (3, 3', 4, 4') engaging in at least one recess (15, 15', 15'', 16).

2. Valve according to Claim 1, **characterized in that** the bearing region (10) of the closing flap (2) has at least one retaining profile (3) which is embedded in a recess (15) of the housing (1).

3. Valve according to Claim 2, **characterized in that** the bearing region (10) of the closing flap has, upstream of the passage slot (20) and lying diagonally opposite the retaining profile (3), a second, inwardly directed retaining profile (4) bearing against a housing edge (25).

4. Valve according to Claim 1, **characterized in that** the bearing region (10) of the closing flap (2) has a retaining profile (4') upstream of the passage slot (20) and a recess (15') downstream of the passage slot (20), the housing (1) being provided with a recess (16) holding the retaining profile (4') of the bearing region (10) and with a retaining profile (3') which can be embedded in the recess (15') of the bearing region.

5. Valve according to Claim 1, **characterized in that** the bearing region (10) of the closing flap (2) has a recess (15'') upstream of the passage slot (20) and a retaining profile (3) downstream of the passage slot (20), the housing (1) being provided with a retaining profile (3'') which can be embedded in the recess (15'') of the bearing region and with a recess (15) holding the retaining profile (3) of the bearing region.

6. Valve according to Claim 1, **characterized in that** the housing (1) has, downstream of the passage slot (20), a retaining profile (3') which can be embedded in a recess (15') of the bearing region (10), and, lying diagonally opposite the retaining profile (3'), a second, inwardly directed retaining profile (4') bearing against a housing edge (25).

7. Valve according to one or more of the preceding claims, **characterized in that** the closing flap (2) is connected only in its bearing region (10) to a side of the housing (1) and, moreover, in spite of the closing flap (2) resting on the webs (5) of the housing (1), the two material components do not stick to each other in the rest state.

8. Method for producing a valve, in particular ventilation and venting valve for the interior of a motor vehicle, having a housing (1) and having at least one closing flap (2) which bears, in the rest position, against webs (5) of the housing (1) and is connected to the housing (1) via a bearing region (10), **characterized in that** with a two-component injection moulding method preferably first of all the housing (1) is produced from a hard material component and subsequently the closing flap (2) consisting of a material component which is softer in comparison, is injected in the same mould, the closing flap (2) being connected only in the bearing region (10) to the housing (1).

9. Method according to Claim 8, **characterized in that** the connection between the housing (1) and the closing flap (2) in the bearing region is produced via at least one retaining profile (3, 4) and/or at least one recess (15, 16).

## Revendications

1. Soupape, en particulier soupape d'aération et de ventilation pour l'espace intérieur d'un véhicule automobile, comprenant un boîtier (1) et au moins un volet obturateur (2) appliqué, en position de repos, contre des membrures (5) dudit boîtier (1), et relié audit boîtier (1) par l'intermédiaire d'une zone de montage (10),
**caractérisée par le fait**
**que** le boîtier (1) et le volet obturateur (2) sont fabriqués selon le procédé de moulage par injection à deux composants, le boîtier (1) consistant en un composant dur, et le volet obturateur (2) en un composant comparativement plus tendre ; et
**que** la zone de montage du volet obturateur (2), et/ou la région associée (12) du boîtier (1), présente(nt) au moins un profil de retenue (3, 3', 4, 4') pénétrant dans au moins un évidement (15, 15', 15'', 16).

2. Soupape selon la revendication 1, **caractérisée par le fait que** la zone de montage (10) du volet obturateur (2) comporte au moins un profil de retenue (3) encastré dans un évidement (15) du boîtier (1).

3. Soupape selon la revendication 2, **caractérisée par le fait que** la zone de montage (10) du volet obturateur présente devant la fente de passage (20), diagonalement à l'opposé du profil de retenue (3), un second profil de retenue (4) dirigé vers l'intérieur et appliqué contre un bord (25) du boîtier.

4. Soupape selon la revendication 1, **caractérisée par le fait que** la zone de montage (10) du volet obturateur (2) comporte un profil de retenue (4') devant la fente de passage (20), et un évidement (15') derrière ladite fente de passage (20),
le boîtier (1) étant muni d'un évidement (16) recevant le profil de retenue (4') de la zone de montage (10), et d'un profil de retenue (3') pouvant être encastré dans l'évidement (15') de la zone de montage.

5. Soupape selon la revendication 1, **caractérisée par le fait que** la zone de montage (10) du volet obturateur (2) comporte un évidement (15'') devant la fente de passage (20), et un profil de retenue (3) derrière ladite fente de passage (20),
le boîtier (1) étant muni d'un profil de retenue (3'') pouvant être encastré dans l'évidement (15'') de la zone de montage, et d'un évidement (15) recevant le profil de retenue (3) de la zone de montage.

6. Soupape selon la revendication 1, **caractérisée par le fait que** le boîtier (1) présente, derrière la fente de passage (20), un profil de retenue (3') pouvant être encastré dans un évidement (15') de la zone de montage (10), sachant qu'il est prévu, diagonalement à l'opposé du profil de retenue (3'), un second profil de retenue (4') dirigé vers l'intérieur et appliqué contre un bord (25) du boîtier.

7. Soupape selon l'une ou plusieurs des revendications précédentes, **caractérisée par le fait que** le volet obturateur (2) n'est relié à un côté du boîtier (1) que dans sa zone de montage (10), les deux composants ne présentant en outre aucune adhérence mutuelle, en condition de repos, malgré le contact à plat du volet obturateur (2) sur les membrures (5) du boîtier (1).

8. Procédé de fabrication d'une soupape, en particulier une soupape d'aération et de ventilation pour l'espace intérieur d'un véhicule automobile, comprenant un boîtier (1) et au moins un volet obturateur (2) appliqué, en position de repos, contre des membrures (5) dudit boîtier (1), et relié audit boîtier (1) par l'intermédiaire d'une zone de montage (10),
**caractérisé par le fait**
**que** le boîtier (1) est de préférence tout d'abord fabriqué en un composant dur, à l'aide d'un procédé de moulage par injection à deux composants, après quoi l'injection du volet obturateur (2) s'opère dans le même outil, en un composant comparativement plus tendre, ledit volet obturateur (2) n'étant relié audit boîtier (1) que dans la zone de montage (10).

9. Procédé selon la revendication 8, **caractérisé par le fait que** la liaison entre le boîtier (1) et le volet obturateur (2) est établie, dans la zone de montage, par l'intermédiaire d'au moins un profil de retenue (3, 4) et/ou d'au moins un évidement (15, 16).
